(19) Europäisches Patentamt
European Patent Office
Office européen des brevets

(11) **EP 2 868 378 A1**

(12) **EUROPÄISCHE PATENTANMELDUNG**

(43) Veröffentlichungstag:
06.05.2015 Patentblatt 2015/19

(51) Int Cl.:
*B01L 3/00* (2006.01)  *F16K 99/00* (2006.01)

(21) Anmeldenummer: 14184707.9

(22) Anmeldetag: 15.09.2014

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **27.09.2013 DE 102013219492**

(71) Anmelder: **ROBERT BOSCH GMBH**
**70442 Stuttgart (DE)**

(72) Erfinder:
• **Hoehl, Melanie**
**71254 Ditzingen (DE)**
• **Daub, Martina**
**71287 Weissach (DE)**
• **Steigert, Juergen**
**70176 Stuttgart (DE)**

(54) **Vorrichtung zur Handhabung von Flüssigkeiten mit Corioliskraft-Schalter**

(57) Eine zentrifugierbare Vorrichtung zur Handhabung von Flüssigkeiten weist wenigstens zwei axial übereinander angeordnete Körper (110, 120) mit jeweils wenigstens einer Kavität (111, 112, 121, 122) auf. Die Kavitäten (111, 112, 121, 122) sind miteinander fluidisch koppelbar. Die Vorrichtung ist dadurch gekennzeichnet, dass wenigstens ein Flüssigkeitspfad (150) vorgesehen ist, dessen Orientierung in Abhängigkeit von einer wirkenden Corioliskraft verläuft.

**Fig. 2A**

**Beschreibung**

Die vorliegende Erfindung betrifft eine Vorrichtung zur Handhabung von Flüssigkeiten, wobei die Vorrichtung wenigstens zwei axial übereinander angeordnete Körper mit jeweils wenigstens einer Kavität aufweist und wobei die Körper in Abhängigkeit von einer Zentrifugalkraft oder einer gleichwirkenden Kraft gegeneinander verdrehbar sind und wobei die Kavitäten miteinander fluidisch koppelbar sind.

Stand der Technik

Die Durchführung von biochemischen oder chemischen Prozessen, beispielsweise im Zusammenhang mit der Aufreinigung bestimmter Moleküle und/oder mit der Analyse und Charakterisierung bestimmter Moleküle, basiert im Wesentlichen auf der Handhabung von Flüssigkeiten. Herkömmlicherweise werden hierfür verschiedene Hilfsmittel, insbesondere Pipetten und verschiedene Reaktionsgefäße, eingesetzt, um bei einer manuellen Handhabung unter Zuhilfenahme verschiedener Laborgeräte die verschiedenen Prozesse durchführen zu können.

Für viele chemische oder biochemische Prozesse wird eine Zentrifugation eingesetzt. Durch die hierbei erzeugte Zentrifugalkraft kann eine Stofftrennung aufgrund eines Dichteunterschiedes zwischen den verschiedenen Komponenten eines Gemisches erreicht werden. Weiterhin ermöglicht die Zentrifugation einen Transport von Flüssigkeiten von einer im Rotor radial weiter innenliegenden Prozessstufe zu einer radial weiter außenliegenden Prozessstufe.

Für viele Reaktionen sind bereits Automatisierungen verfügbar, wobei beispielsweise Pipettierroboter oder andere Spezialgeräte zum Einsatz kommen. Weiterhin können mit sogenannten Lab-on-a-Chip-Systemen viele biochemische Prozesse in voll automatisierter Weise durchgeführt werden. Es handelt sich hierbei um mikrofluidische Systeme, welche die gesamte Funktionalität eines makroskopischen Labors auf einem nur etwa plastikkartengroßen Kunststoffsubstrat vereinigen. Neben dem Kunststoffsubstrat mit verschiedenen Kanälen, Reaktionskammern usw. sind vorgelagerten Reagenzien und verschiedene aktive Komponenten, wie beispielsweise Ventile oder Pumpen, sowie weitere Aktuations-, Detektions- und Steuereinheiten hierfür erforderlich.

Weiterhin sind kartuschenbasierte Systeme bekannt, wobei die Flüssigkeiten typischerweise in einem Spezialgerät in einer Kartusche prozessiert werden. Beispielsweise beschreibt die deutsche Offenlegungsschrift DE 10 2010 003 223 A1 ein System mit einer Vorrichtung, die zum Einsetzen in einen Zentrifugationsrotor vorgesehen ist. Hierbei sind zwei oder mehr revolverartige Körper axial übereinander angeordnet. Die Revolver beinhalten dabei ein oder mehrere Kavitäten, insbesondere Reaktionskammern, Kanäle und gegebenenfalls weitere Strukturen für die Durchführung von Prozessen, insbesondere von fluidischen Einheitsoperationen. Ein Beschleunigungswechsel der Zentrifuge aktiviert eine integrierte Mechanik, die nach Art einer Kugelschreibermechanik funktioniert. Infolge der Zentrifugalkraft bewegen sich die Körper radial nach außen, wobei die Körper mittels einer Verzahnung und einem integrierten Rückstellmittel gegeneinander verdreht werden. Einzelne Kavitäten können hierdurch miteinander verschaltet werden. Darüber hinaus ist ein orientierungsabhängiges Öffnen von einzelnen Kavitäten oder Gefäßen der Körper möglich, wobei eine Seite des Gefäßes beispielsweise mit einer durchstechbaren Folie versehen ist. Mit Hilfe eines Dorns auf dem anderen Körper wird die Folie durch die Bewegung der Körper gegeneinander durchstoßen. Auf diese Weise kann eine kontrollierte Fluidführung in der Vorrichtung erreicht werden. Beispielsweise kann eine Fluidführung von Vorlagerungskammern über zwischengeschaltete Prozessierungskammern bis hin zu Auffangkavitäten für die prozesszierten Flüssigkeiten realisiert werden. Ein derartiges System kann zum Beispiel zur Aufreinigung von biologischen oder biochemischen Molekülen genutzt werden. Hierfür werden im obersten Revolver die Probe und alle zur Aufreinigung benötigten Reagenzien eingesetzt. Die darunterliegenden Revolver dienen als Reaktionsstufen für die verschiedenen Festoder Flüssigphasenreaktionen. Der Transport von Probe und Reagenzien vom obersten zum untersten Revolver erfolgt durch die Zentrifugalkraft einer Standard-Laborzentrifuge, indem die Flüssigkeiten entlang des Kraftvektors der Zentrifugalkraft von radial innenliegenden Punkten zu radial außenliegenden Punkten transportiert werden.

Die US-Patentanmeldungsschrift US 2006 073 082 A1 beschreibt eine zentrifugierbare Scheibe zur Handhabung von Flüssigkeiten, bei der eine Kanalverzweigung vorgesehen ist. Eine Schaltung der Flüssigkeiten erfolgt in Abhängigkeit von einer wirkenden Corioliskraft.

Offenbarung der Erfindung

Vorteile der Erfindung

Die erfindungsgemäße Vorrichtung dient zur Handhabung von Flüssigkeiten, beispielsweise im Hinblick auf die Durchführung von chemischen und/oder biochemischen Prozessen. Die Erfindung geht dabei von einer zentrifugierbaren Vorrichtung aus, die wenigstens zwei axial übereinander angeordnete Körper umfasst, die jeweils wenigstens eine Kavität aufweisen. Die Kavitäten sind miteinander fluidisch koppelbar. Insbesondere geht die Erfindung von einem gestapelten Zentrifugalsystem aus. Beispielsweise können die Körper des Systems in Abhängigkeit von einer Zentrifugalkraft oder einer gleich wirkenden Kraft gegeneinander verdrehbar oder verschiebbar sein, sodass in Abhängigkeit von der wirkenden Zentrifugalkraft oder der gleichwirkenden Kraft ein bestimmter Flüssigkeitspfad vorgegeben werden kann. Die Körper sind beispielsweise als Revolver ausgestaltet. Die Revolver können in einer Vorrichtung zusammengefasst sein, die zum Einsetzen in den Rotor einer Zentrifuge vorgesehen ist. Ein Transport von Flüssigkeiten durch die übereinander angeordneten Körper erfolgt in vorgebbarer Weise unter Ausnutzung der Zentrifugalkraft oder der gleichwirkenden Kraft. Insbesondere handelt es sich um eine mikrofluidische Anordnung. Erfindungsgemäß ist in dieser Vorrichtung wenigstens ein Flüssigkeitspfad vorgesehen, dessen Orientierung in Abhängigkeit von einer wirkenden Corioliskraft verläuft. Durch einen derartigen Flüssigkeitspfad kann die mechanische und fluidische Funktionalität der gattungsgemäßen Vorrichtung deutlich erweitert und verbessert werden. Insbesondere bei der Automatisierung von komplexen biochemischen Prozessen sind eine Vielzahl von Funktionalitäten erforderlich, die bei herkömmlichen, vergleichbaren Vorrichtungen mit einem geschalteten Flüssigkeitstransport durch die begrenzten Möglichkeiten der fluidischen Pfade nicht realisierbar sind. Beispielsweise ist die Anzahl der fluidischen Pfade bei einer Vorrichtung, die auf der Basis der eingangs beschriebenen Kugelschreibermechanik basiert, derart begrenzt, dass komplexe Prozesse hiermit in der Regel nicht durchführbar sind. Durch den oder die erfindungsgemäß vorgesehenen Flüssigkeitspfad(e), der (die) in Abhängigkeit von der wirkenden Corioliskraft schaltbar ist (sind), wird die Anzahl der möglichen fluidischen Pfade effektiv erhöht, sodass derartige Systeme oder Vorrichtungen mit deutlich komplexeren Protokollen eingesetzt werden können. Durch den erfindungsgemäß vorgesehenen Flüssigkeitspfad kann damit in Vorrichtungen mit gestapelten Körpern die effektive Anzahl der fluidischen Pfade im System erhöht werden. Der Weg der Flüssigkeiten kann damit in besonders vorteilhafter Weise an den geplanten Automatisierungsprozess und an das Zentrifugenprotokoll angepasst werden.

In einer besonders bevorzugten Ausgestaltung der erfindungsgemäßen Vorrichtung wirkt der Corioliskraft-abhängige Flüssigkeitspfad als Flüssigkeitsschalter, wobei zwei oder mehr alternative Flüssigkeitspfadverläufe vorgesehen sind. Beispielsweise ist die Vorrichtung so ausgestaltet, dass die alternativen Flüssigkeitspfadverläufe in verschiedene Kavitäten eines, in Flussrichtung gesehen, unterhalb liegenden Körpers münden. Auf diese Weise kann in Abhängigkeit von der wirkenden Corioliskraft die Flüssigkeit in eine bestimmte Kavität geleitet werden, wodurch unterschiedliche Prozessierungsprotokolle realisiert werden können. Für diesen Schalteffekt muss die Zentrifugalkraft nur einmal über einen bestimmten Schwellenwert verändert werden.

Die Orientierung des Corioliskraft-abhängigen Flüssigkeitspfades kann unabhängig von der Drehung der Körper oder Revolver zueinander ausgestaltet werden. Beispielsweise kann der erfindungsgemäße Flüssigkeitspfad eine Verbindung zwischen zwei übereinander liegenden Körpern oder eine Verbindung und Schaltung zwischen Kavitäten innerhalb eines Körpers realisieren.

Um die erfindungsgemäße Flüssigkeitsschaltung zu erreichen, muss eine bestimmte Rotationsgeschwindigkeit erreicht werden. Im Allgemeinen gilt, dass der Betrag der Corioliskraft ($f_{Coriolis}$) mindestens zweimal so hoch wie die Zentrifugalkraft ($f_\omega$) sein sollte. Die erforderliche Zentrifugalgeschwindigkeit lässt sich insbesondere aus der folgenden Formel ableiten:

$$\frac{\left|\vec{f}_{Coriolis}\right|}{\left|\vec{f}_\omega\right|} = \frac{\rho \cdot \Delta x^2 \cdot \omega}{4 \cdot \eta}$$

wobei $\rho$ die Dichte der Flüssigkeit, $\omega$ die Zentrifugalgeschwindigkeit (rad/s), $\eta$ die Viskosität der Flüssigkeit und $\Delta x$ die Kanalbreite ist. Bei einer Kanalbreite von beispielsweise $\Delta x = 200\ \mu m$ wird die Korioliskraft bei über 100 rad/s dominant, sodass für den erfindungsgemäßen Flüssigkeitsschalter mindestens 200 rad/s eingesetzt werden sollten. Sobald die Schwelle erreicht wird, bei der die transversal wirkende Corioliskraft dominant wird, wird die Orientierung des Flüssigkeitspfades durch die Richtung der Rotation bestimmt. Die Lenkung des Flüssigkeitspfades wird dabei allein durch die transversal wirkende Corioliskraft bewirkt. Dieser Effekt kann erfindungsgemäß genutzt werden, um den Flüssigkeitsstrahl in eine gewünschte Richtung und damit in eine definierte Kavität zu lenken.

Der hier verwendete Ausdruck "Flüssigkeit" ist nicht beschränkt auf Medien im flüssigen Aggregatzustand. Vielmehr ist hierunter allgemein ein fließfähiges Medium zu verstehen, das neben flüssigen Bestandteilen auch andere, beispielsweise gasförmige oder feste Bestandteile, enthalten kann. Unter Umständen kann das fließfähige Medium auch ausschließlich aus festen Bestandteilen bestehen, z.B. aus sehr feinkörnigen Bestandteilen.

Vorzugsweise wird der Flüssigkeitspfad, dessen Orientierung von der wirkenden Corioliskraft abhängig ist, in Form von Kanälen realisiert. Diese Kanäle weisen insbesondere eine verzweigte Struktur auf, wobei beispielsweise ein Einlaufkanal und zwei oder mehr Auslaufkanäle vorgesehen sind. Durch die Richtung der wirkenden Zentrifugalkraft während der Prozessierung der Flüssigkeiten innerhalb der erfindungsgemäßen Vorrichtung gelangt die Flüssigkeit zunächst in den Einlaufkanal. Wenn eine bestimmte Rotationsgeschwindigkeitsschwelle erreicht ist, wird die wirkende Corioliskraft dominant, sodass eine Flüssigkeitsablenkung in transversaler Richtung erfolgt, abhängig von der Rotationsrichtung, und die Flüssigkeit wird in den entsprechend orientierten Auslaufkanal gelenkt. Die Kanalstruktur kann beispielsweise in Form einer umgekehrten Y-Anordnung ausgebildet sein, wobei der nach oben gerichtete Einlaufkanal den beiden nach unten gerichteten Auslaufkanälen entgegengesetzt liegt. Im Prinzip können beliebig viele Arme, also Auslaufkanäle, realisiert werden, die je nach dem Grad der wirkenden Corioliskraft den Weg der Flüssigkeiten vorgeben.

Außer der Realisierung in Form von Kanälen kann der Corioliskraft-abhängige Flüssigkeitspfad auch beispielsweise in Form einer Öffnung ausgebildet sein, wobei diese Öffnung sich insbesondere im unteren Bereich, in Flussrichtung gesehen, einer Kavität befindet. Abhängig von der wirkenden Corioliskraft wird die Flüssigkeit, die aus dieser Öffnung austritt, in eine bestimmte Richtung abgelenkt. Das heißt, wenn im Wesentlichen keine Corioliskraft wirkt, tritt die Flüssigkeit in axialer Richtung aus. Wenn die Corioliskraft wirkt bzw. dominant ist, wird die Flüssigkeit in Rotationsrichtung transversal abgelenkt. Die Richtung der Corioliskraft steht dabei senkrecht sowohl zur Bewegungsrichtung des Körpers als auch zur Rotationsachse des Bezugssystems und wirkt entgegen der Richtung der Zentrifugationsrotation. Dies kann erfindungsgemäß genutzt werden, um in Abhängigkeit von der wirkenden Corioliskraft die Flüssigkeit in eine bestimmte Kavität zu überführen, die sich in entsprechender Position unterhalb der Öffnung bzw. versetzt dazu befindet.

Unabhängig davon, in welcher Form der Flüssigkeitspfad realisiert ist, kann der Flüssigkeitsstrahl in Abhängigkeit von der wirkenden Corioliskraft in zwei oder mehr unterschiedliche Kavitäten gelenkt werden. Weiterhin ist es möglich, dass die Flüssigkeiten in Abhängigkeit von der wirkenden Corioliskraft zu unterschiedlichen Anteilen in unterschiedliche, stromabwärts gelegene Kavitäten gelenkt werden. Hierbei können die fluidischen Ströme auch in verschiedenen Verhältnissen, die von den wirkenden Kräften abhängen, aufgeteilt werden. Beispielsweise kann die Vorrichtung so ausgelegt sein, dass der Flüssigkeitsstrom nicht vollständig durch die Corioliskraft ausgelenkt wird, sodass eine Aufteilung des Flüssigkeitsstromes in verschiedene, stromabwärts gelegene Kavitäten erfolgen kann.

Weiterhin kann mit der erfindungsgemäßen Corioliskraft-abhängigen Auslenkung des Flüssigkeitsstromes eine Trennung von Substanzen, basierend auf deren Dichte, erreicht werden. Beispielsweise können Beads oder andere Partikel von einer Flüssigkeit getrennt und gegebenenfalls aufkonzentriert werden, indem sie basierend auf ihrer Dichte in verschiedene Richtungen ausgelenkt werden. Dieser Aspekt der Erfindung eignet sich beispielsweise auch für die Auftrennung der Bestandteile von Blut (Blutzellen und Plasma) oder von Zellen verschiedener Größe.

Der erfindungsgemäße Flüssigkeitsschalter kann in mehrfacher Weise und in unterschiedlicher Form in eine Vorrichtung integriert werden. Beispielsweise kann er in Serie und/oder parallel angeordnet sein. Die Form der Kanalstruktur zur Realisierung des erfindungsgemäßen Flüssigkeitsschalters kann sehr unterschiedlich sein. Beispielsweise kann die Kanalanordnung symmetrisch oder asymmetrisch sein. Die Verzweigungen können beispielsweise abgerundet oder gewinkelt sein.

Die erfindungsgemäße Vorrichtung mit einem oder mehreren Corioliskraftbasierenden Flüssigkeitsschaltern ist konstruktiv einfach zu realisieren. Ein besonderer Vorteil ist, dass keine weiteren beweglichen Bauteile, wie beispielsweise Federn oder anderes, erforderlich sind und dass die verschiedenen Körper beispielsweise alle aus dem gleichen Material gefertigt werden können, beispielsweise aus Gummi, Polymeren, Glas, Silizium, Metallen, Kunststoffen, Thermoplasten (z.B. Polyethylen (PE), Polypropylen (PP), Polycarbonate (PC), Cyklo-Olefin-Copolymere (COC) oder Cyklo-Olefin-Polymere (COP)), oder Elastomeren. Auch die äußere Wandung der Vorrichtung, beispielsweise ein Zentrifugenröhrchen, kann aus dem gleichen oder auch aus einem anderen Material gefertigt sein. Die Kanäle innerhalb der Vorrichtung können platzsparend angeordnet werden. Für die Corioliskraft-abhängige Schaltung der Flüssigkeiten sind keine druckdichten Anschlüsse erforderlich, da sowohl die Ein- als auch die Auskoppelung der Flüssigkeiten kontaktlos über das Zentrifugalfeld geschieht. Eine derartige Vorrichtung ist also sehr kostengünstig herstellbar.

Der als Flüssigkeitsschalter nutzbare Corioliskraft-abhängige Flüssigkeitspfad kann im Prinzip in alle Zentrifugalkraft-basierten gestapelten fluidischen Systeme integriert werden. In besonders vorteilhafter Weise kann er beispielsweise für gestapelte Systeme genutzt werden, die wenigstens zwei axial übereinander angeordnete Körper mit geeigneten Strukturen umfassen, die in Abhängigkeit von einer Zentrifugalkraft oder einer gleich wirkenden Kraft gegeneinander verdrehbar oder verschiebbar sind. Besonders geeignet ist die erfindungsgemäße Vorrichtung für mikrofluidische Systeme.

Die erfindungsgemäße Vorrichtung ist für verschiedene Anwendungen mit Vorteil einsetzbar. Beispielsweise kann sie insbesondere zur Durchführung von chemischen und/oder biochemischen Prozessen eingesetzt werden. Sie ist insbesondere für biochemische Aufreinigungsprotokolle oder anderes geeignet, indem der Corioliskraft-basierte Flüssigkeitsschalter beispielsweise für die Durchführung einer zielgerichteten Elution einer Zielsubstanz in einem Aufreinigungsprotokoll eingesetzt werden kann. Oder die erweiterten Funktionalitäten der erfindungsgemäßen Vorrichtung können genutzt werden, um Reaktionsprodukte eines automatisierten Prozesses zu detektieren oder Aufreinigungsschritte in einem Aufreinigungsprotokoll zu kontrollieren.

Mit Vorteil kann die erfindungsgemäße Schaltung des Flüssigkeitspfades in einer Vorrichtung integriert werden, bei der für eine Verdrehung der axial übereinander angeordneten Körper ein Eingriff von Führungsfedern des einen Körpers in eine Profilzahnreihe des anderen Körpers und eine entgegen der Zentrifugalkraft oder entgegen der gleichwirkenden Kraft wirkende Rückstellkraft der Körper vorgesehen ist. Derartige gestapelte, Zentrifugalkraft-basierte Systeme, die beispielsweise für mikrofluidische Anwendungen ausgelegt sind und die auf einer sogenannten Kugelschreibermechanik basieren, sind bereits für verschiedene automatisierte Anwendungen einsetzbar. Durch den erfindungsgemäß vorgesehenen Flüssigkeitsschalter, der von der wirkenden Corioliskraft abhängig ist, können die Funktionalitäten und insbesondere die Anzahl der fluidischen Pfade, die in einem solchen System parallel eingesetzt werden können, erheblich erweitert werden, sodass die erfindungsgemäße Erweiterung einer solchen Vorrichtung die Potentiale für die Anwendung bei verschiedensten Protokollen erheblich verbessert. Andererseits ist es auch möglich, durch die Verwendung des erfindungsgemäßen, auf der Corioliskraft basierenden Flüssigkeitsschalters auf andere Schaltmechanismen in einer gestapelten mikrofluidischen Vorrichtung teilweise oder vollständig zu verzichten. Beispielsweise kann durch die Verwendung der erfindungsgemäßen Flüssigkeitsschalter ein Zentrifugalsystem zur automatisierten Prozessierung von Flüssigkeiten bereitgestellt werden, das im Hinblick auf die Funktionalitäten mit dem Zentrifugalsystem vergleichbar ist, das in der Offenlegungsschrift DE 10 2010 003 223 A1 beschrieben ist, das aber auf die verhältnismäßig aufwendige Kugelschreibermechanik teilweise oder vollständig verzichtet, wodurch die Kosten für einen derartigen Einwegartikel erheblich gesenkt werden können.

Weitere Merkmale und Vorteile der erfindungsgemäßen Vorrichtung ergeben sich aus der nachfolgenden Beschreibung von Ausführungsbeispielen im Zusammenhang mit den Zeichnungen. Hierbei können die einzelnen Merkmale jeweils für sich oder in Kombination miteinander verwirklicht sein.

Kurze Beschreibung der Zeichnungen

In den Zeichnungen zeigen:

Fig. 1        Schnittdarstellung einer zentrifugierbaren Vorrichtung mit mehreren zueinander verdrehbaren Revolvern aus dem Stand der Technik;

Fig. 2A/B    schematische Darstellungen von zueinander verdrehbaren Revolvern mit erfindungsgemäßem Flüssigkeitsschalter;

Fig. 3        Detaildarstellung einer Kanalstruktur als erfindungsgemäßer Flüssigkeitsschalter;

Fig. 4        schematische Darstellung einer weiteren Ausgestaltung des erfindungsgemäßen Flüssigkeitsschalters und

Fig. 5        schematische Darstellung einer Auftrennung von Feststoffen mit einem erfindungsgemäßen Flüssigkeitsschalter.

Beschreibung von Ausführungsbeispielen

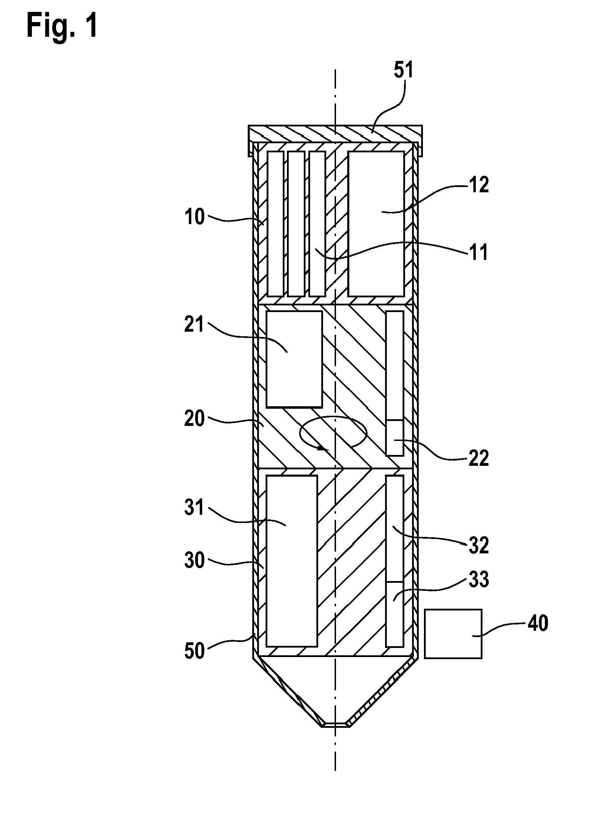

**Fig. 1** zeigt in schematischer Weise ein System zur automatischen Prozessierung von biochemischen Prozessen aus dem Stand der Technik, das auf mehreren axial übereinander angeordneten Körpern (Revolvern) 10, 20, 30 beruht, die gegeneinander verdrehbar sind. Die Körper 10, 20, 30 umfassen verschiedene Kavitäten 11, 12, 21, 22, 31, 32, 33, die als Behältnisse und Reaktionsräume dienen. Die Vorrichtung kann beispielsweise für eine Proteinaufreinigung eingesetzt werden. In den Kavitäten 11 werden Reagenzien vorgehalten. In die Kavität 12 wird die Probe eingebracht. Die Kavität 21 stellt eine Mischkammer dar. Die Kavität 22 enthält eine Matrix-basierte Säule, mit der die eigentliche Proteinaufreinigung erfolgt. Die Kavität 31 ist für den Abfall vorgesehen. In der Kavität 32 wird das Eluat aufgefangen. In einer anschließenden Reaktionskammer 33 kann das aufgereinigte Protein mit einer biochemischen Reaktion nachgewiesen werden, wobei ein Detektor 40, der sich außerhalb der Vorrichtung befindet, eingesetzt werden kann. Die Körper 10, 20, 30 befinden sich in gestapelter Weise innerhalb eines Zentrifugenröhrchens 50, das mit einem Deckel 51 verschließbar ist. Das Zentrifugenröhrchen 50 wird in den Rotor einer Laborzentrifuge eingesetzt. Durch die wirkenden Zentrifugalkräfte verdrehen sich die Körper 10, 20, 30 in vorgegebener Weise gegeneinander, insbesondere über eine integrierte Kugelschreibermechanik. Der Transport von Probe und Reagenzien vom obersten Revolver 10 bis zum untersten Revolver 30 erfolgt durch die Zentrifugalkraft. Hierbei kann es vorgesehen sein, dass durch Dorne oder ähnliches an den Körpern 20, 30 die darüberliegende Kavitäten geöffnet werden. Der Fluidfluss erfolgt in vorgegebener Weise, sodass die Probe aus der Kavität 12 in vorbestimmter Weise die verschiedenen Prozessierungsschritte durchläuft.

Das Schalten und der Transport der Flüssigkeiten ist dabei durch die verschiedenen fluidischen Pfade oder abgegrenzten Elutionskammern innerhalb der Revolver 10, 20, 30 realisiert. Allerdings ist hierbei die Anzahl der möglichen fluidischen Pfade begrenzt. Die Erfindung sieht demgegenüber vor, eine weitere Schaltung der Flüssigkeiten zu ermöglichen, indem wenigstens ein Flüssigkeitspfad vorgesehen ist, dessen Orientierung in Abhängigkeit von einer wirkenden Corioliskraft verläuft.

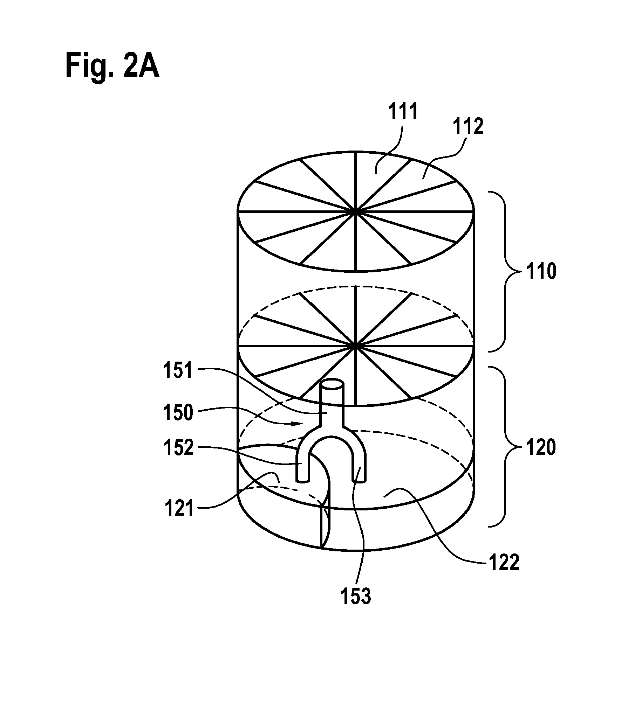

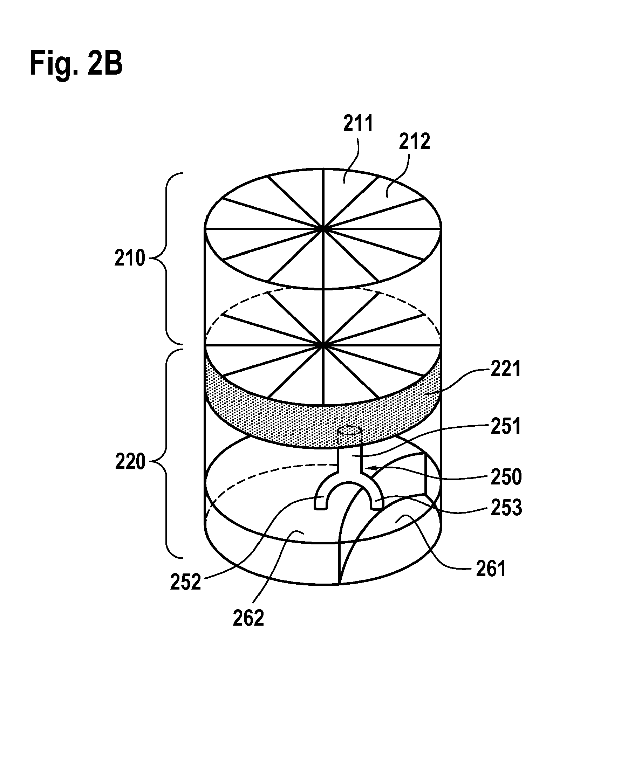

**Fig. 2A** und **Fig. 2B** illustrieren beispielhafte Ausführungsformen eines derartigen Flüssigkeitsschalters, der auf der Wirkung der Corioliskraft basiert. Die Flüssigkeitsschalter 150, 250 werden durch verzweigte Kanalstrukturen realisiert. In Figur 2A ist ein oberer Revolver 110 und ein stromabwärtiger, unterer Revolver 120 gezeigt, die gegeneinander in Abhängigkeit von einer Zentrifugalkraft verdrehbar sind. Der Revolver 110 umfasst insgesamt acht, hier nur angedeutete Kavitäten 111, 112. Die Kanalstruktur für den Corioliskraft-abhängigen Flüssigkeitsschalter ist als umgekehrte Y-Anordnung 150 ausgestaltet. Die Kanalstruktur 150 umfasst einen Einlaufkanal 151 und zwei Auslaufkanäle 152, 153. Die Kanalstruktur 150 befindet sich im oberen Bereich des zweiten Revolvers 120. Abhängig von der wirkenden Corioliskraft wird die Flüssigkeit innerhalb der Kanalstruktur 150 in den einen Auslaufkanal 152 oder in den anderen Auslaufkanal 153 abgelenkt. In welchen Kanal die Flüssigkeit gelenkt wird, hängt also davon ab, ob eine bestimmte Schwelle der wirkenden Kräfte überschritten wird. Wenn eine bestimmte Zentrifugalgeschwindigkeit, insbesondere in einem Beschleunigungsbereich zwischen 40 und 12.000 x g, erreicht wird, wird die transversal wirkende Corioliskraft dominant gegenüber der radial wirkenden Zentrifugalkraft, sodass in Abhängigkeit von der Rotationsrichtung die Flüssigkeit in einen bestimmten Kanal gelenkt wird. Bei einer Kanalbreite von $\Delta x = 200$ $\mu$m wird die Corioliskraft in Abhängigkeit von der Auslegung des Systems beispielsweise bei über 100 rad/s dominant, sodass zur erfindungsgemäßen Flüssigkeitsschaltung mindestens 200 rad/s eingestellt werden sollte.

Unterhalb der Auslaufkanäle 152, 153 befinden sich verschiedene Kammern (Kavitäten) 121, 122 innerhalb des Revolvers 120, sodass die Flüssigkeit in Abhängigkeit von der wirkenden Corioliskraft in eine bestimmte Kammer 121 oder 122 geleitet wird. Die hier gezeigte Ausgestaltung ist auf verschiedene Weise erweiterbar. Beispielsweise können die Kammern 121, 122 im Prinzip beliebig viele Kompartimente aufweisen. Weiterhin kann beispielsweise die Kammer 121 als Mischvorrichtung ausgestaltet sein, die zwei oder mehrere Zugangskanäle besitzt.

Der erfindungsgemäße Flüssigkeitsschalter kann die Verbindung zwischen zwei Revolvern oder Körpern realisieren und/oder der Flüssigkeitsschalter kann die Verbindung zwischen mehreren Kavitäten innerhalb eines Revolvers oder Körpers bilden, wie es in beispielhafter Weise in Figur 2B illustriert ist. Hier befindet sich der erfindungsgemäße Flüssigkeitsschalter 250, der wiederum als Kanalstruktur in umgekehrter Y-Anordnung ausgestaltet ist, innerhalb des zweiten Revolvers 220. Oberhalb des zweiten Revolvers 220 befindet sich ein erster Revolver 210 mit einer Mehrzahl von hier nur angedeuteten Kavitäten 211, 212. In Abhängigkeit von der Rotation der Revolver 210 und 220 zueinander gelangen Flüssigkeiten aus den Kavitäten 211,212 des Revolvers 210 in die Kammer 221 des Revolvers 220. An die Kammer 221 schließt sich die erfindungsgemäße Kanalstruktur 250 an. Zunächst gelangt die Flüssigkeit in den Einlaufkanal 251 der Kanalstruktur 250. Abhängig von der wirkenden Corioliskraft wird die Flüssigkeit in einen der beiden Auslaufkanäle 252, 253 abgelenkt und wird so in eine der darunterliegenden Kammern 262, 261 überführt. Auf diese Weise kann beispielsweise das Eluat eines Säulen-Aufreinigungsprozesses, der in dem Reaktionsraum 221 stattfindet, in einer bestimmten Kammer (261 oder 262) aufgefangen werden. Der Abfall aus verschiedenen Binde- und Waschschritten kann in der jeweils anderen Kammer (262 oder 261) aufgefangen werden. Hierbei kann auf weitere Schaltschritte der Revolver untereinander beispielsweise per Kugelschreibermechanik verzichtet werden. Insgesamt kann also durch die erfindungsgemäßen Flüssigkeitsschalter die Anzahl der notwendigen Schaltschritte durch Drehung der Revolver zueinander verringert werden, sodass insgesamt die Verschaltungsmöglichkeiten vergrößert werden und komplexere Abläufe mit der erfindungsgemäßen Vorrichtung realisierbar sind. Durch die Integration der erfindungsgemäßen Flüssigkeitsschalter in eine Vorrichtung, die für eine Zentrifugalkraft-basierte Prozessierung vorgesehen ist, kann auf Schaltschritte per Kugelschreibermechanik oder andere aufwendige Mechaniken gegebenenfalls auch teilweise oder vollständig verzichtet werden.

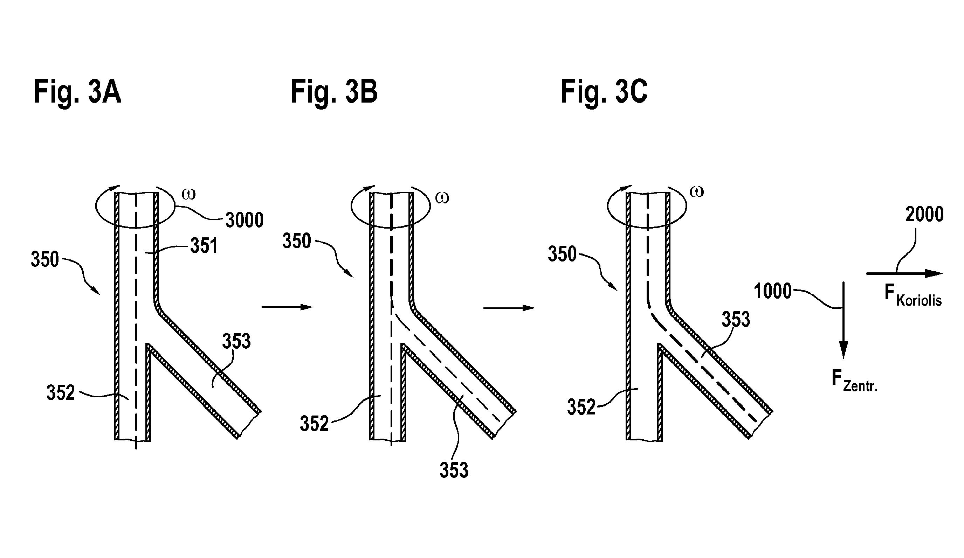

**Fig. 3** zeigt in schematischer Weise die Auslenkung eines Flüssigkeitsstrahls durch die wirkende Corioliskraft innerhalb einer erfindungsgemäßen Kanalstruktur 350, die als Flüssigkeitsschalter wirkt. Gezeigt sind der Einlaufkanal 351 und die Auslaufkanäle 352 und 353. Die gestrichelte Linie deutet jeweils den Flüssigkeitspfad an. Die Zentrifugalkraft wirkt von oben nach unten, angedeutet durch den Pfeil 1000. Die Corioliskraft wirkt in einer transversalen Richtung, angedeutet durch den Pfeil 2000. Die Rotationsrichtung der Zentrifugation ist durch den Pfeil 3000 angedeutet. Solange die Zentrifugalkraft 1000 dominiert, findet keine weitere Ablenkung des Flüssigkeitspfades statt. Die Flüssigkeit wird durch den Auslaufkanal 352 geleitet (Figur 3A). Bei zunehmender Drehgeschwindigkeit kommt die Corioliskraft 2000 verstärkt zum Tragen. Der Flüssigkeitsstrahl wird zum Teil durch die Corioliskraft 2000 abgelenkt, sodass der Strahl, je nach wirkender Corioliskraft, in unterschiedlichen Verhältnissen in die aufspaltenden Auslaufkanäle 352 und 353 aufgeteilt wird (Figur 3B). Sobald die Corioliskraft 2000 vollständig dominiert, wird der Flüssigkeitsstrahl vollständig transversal abgelenkt und wird über den Auslaufkanal 353 ausgeleitet (Figur 3C). Durch geeignetes Einstellen der Drehgeschwindigkeiten kann die Wirkung der Corioliskraft gesteuert werden, sodass der Flüssigkeitspfad in den einen oder den anderen Auslaufkanal geleitet oder in einem bestimmten Verhältnis auf beide Auslaufkanäle aufgeteilt wird. Die hier gezeigte einfache Verzweigung der Auslaufkanäle 352, 353 kann auf weitere Auslaufkanäle erweitert werden.

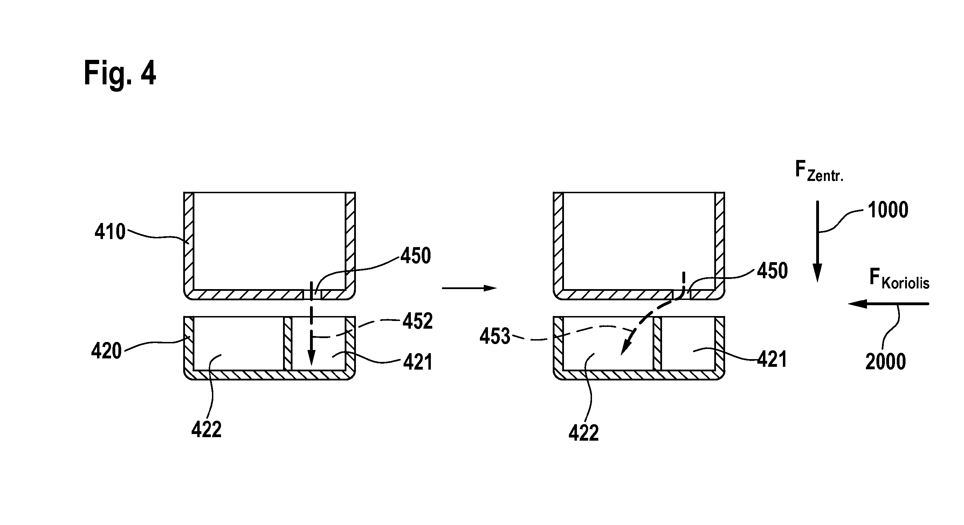

In einer weiteren Ausgestaltung der Erfindung kann der erfindungsgemäße Flüssigkeitsschalter durch eine Öffnung im stromabwärtigen unteren Teil einer Kavität gebildet sein, wie es in **Fig. 4** illustriert ist. Dargestellt sind ein oberer Körper 410 und ein unterer Körper 420. Am Boden des oberen Körpers 410 ist eine Öffnung 450 vorgesehen, durch die die Flüssigkeit infolge der wirkenden Zentrifugalkraft 1000 läuft. Solange die Corioliskraft 2000 nicht dominiert, wird die Flüssigkeit nicht abgelenkt und gelangt über den Flüssigkeitspfadverlauf 452 in eine direkt darunterliegende Kammer 421. Sobald die Corioliskraft 2000 dominiert, wird die Flüssigkeit transversal abgelenkt und gelangt über den Flüssigkeitspfadverlauf 453 in eine andere Kammer 422 des Körpers 420. Die zwei Kammern 421 und 422 des Körpers 420 sind hierbei nur beispielhaft zu verstehen. Es können auch mehr separate Kammern vorgesehen sein oder der Flüssigkeitsstrahl kann in unterschiedlichen Verhältnissen in unterschiedliche Kammern abgelenkt werden.

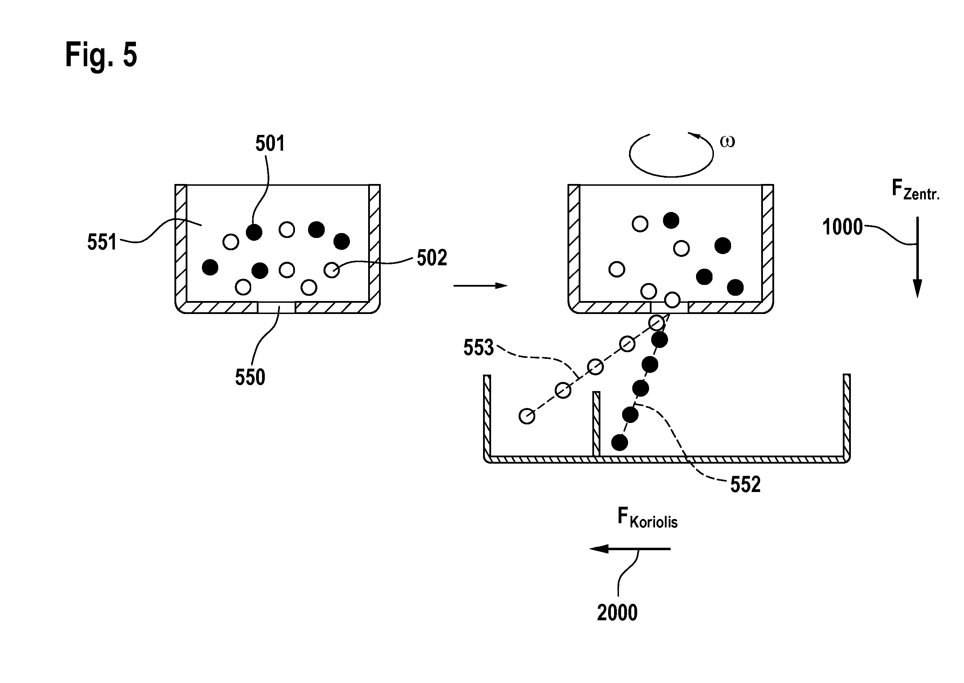

Da die Wirkung der Corioliskraft auf die Auslenkung eines Flüssigkeitsstrahls in Abhängigkeit von der Dichte des Mediums erfolgt, kann auf der Basis dieses Prinzips auch eine Auftrennung von verschiedenen Materialien, insbesondere Flüssigkeiten oder Feststoffen, mit unterschiedlicher Dichte oder Masse erfolgen. Dies ist in schematischer Weise in der **Fig. 5** angedeutet. Hierbei befindet sich ein fließfähiges Medium in einer Kavität 551. Die Kavität 551 entspricht in ihrer Funktion dem Einlaufkanal 151 oder 251 gemäß den Ausführungsformen, die in den Fig. 2A und B dargestellt sind. Das fließfähige Medium in der Kavität 551 enthält verschiedene Feststoffe 501 und 502, die jeweils eine unterschiedliche Dichte aufweisen. Das fließfähige Medium tritt aus einer Öffnung 550 am Boden der Kavität 551 aus. Abhängig von der wirkenden Zentrifugalkraft 1000 und der wirkenden Corioliskraft 2000 werden die Feststoffe 501, 502 beim Austritt auf zwei unterschiedlichen Pfaden 552 und 553 infolge der unterschiedlichen Dichten abgelenkt und können auf diese Weise separiert werden. Auf diese Weise können zum Beispiel Beads oder Partikel von einer Flüssigkeit getrennt beziehungsweise aufkonzentriert werden. Weiterhin können verschiedene Bestandteile von Blut (Blutzellen und Blutplasma) separiert oder Zellen verschiedener Größe aufgetrennt werden. Bei der Auftrennung von Flüssigkeiten oder Feststoffen unterschiedlicher Dichte oder Masse ist es vorteilhaft, wenn die Oberflächenspannung des Mediums verhältnismäßig niedrig ist.

**Patentansprüche**

1. Zentrifugierbare Vorrichtung zur Handhabung von Flüssigkeiten, wobei die Vorrichtung wenigstens zwei axial übereinander angeordnete Körper (110, 120; 210, 220; 410, 420) mit jeweils wenigstens einer Kavität (111, 112, 121, 122; 211, 212; 221, 261, 262; 421, 422) aufweist und wobei die Kavitäten miteinander fluidisch koppelbar sind, **dadurch gekennzeichnet, dass** wenigstens ein Flüssigkeitspfad (150; 250; 350; 450; 550) vorgesehen ist, dessen Orientierung in Abhängigkeit von einer wirkenden Corioliskraft verläuft.

2. Vorrichtung nach Anspruch 1, **dadurch gekennzeichnet, dass** der wenigstens eine Flüssigkeitspfad (150; 250; 350; 450; 550), dessen Orientierung in Abhängigkeit von einer wirkenden Corioliskraft verläuft, als Flüssigkeitsschalter wirkt, wobei zwei oder mehr alternative Flüssigkeitspfadverläufe (152, 153; 252, 253; 352, 353; 452, 453; 552, 553) vorgesehen sind.

3. Vorrichtung nach Anspruch 1 oder Anspruch 2, **dadurch gekennzeichnet, dass** der wenigstens eine Flüssigkeitspfad, dessen Orientierung in Abhängigkeit von einer wirkenden Corioliskraft verläuft, in Form von Kanälen (150; 250; 350) ausgebildet ist.

4. Vorrichtung nach Anspruch 3, **dadurch gekennzeichnet, dass** die Kanäle (150; 250; 350) eine verzweigte Struktur aufweisen, wobei vorzugsweise ein Einlaufkanal (151; 251; 351) und wenigstens zwei Auslaufkanäle (152, 153; 252, 253; 352, 353) vorgesehen sind.

5. Vorrichtung nach einem der vorhergehenden Ansprüche, **dadurch gekennzeichnet**, das der wenigstens eine Flüssigkeitspfad, dessen Orientierung in Abhängigkeit von einer wirkenden Corioliskraft verläuft, in Form einer Öffnung (450; 550) ausgebildet ist.

6. Vorrichtung nach einem der vorhergehenden Ansprüche, **dadurch gekennzeichnet, dass** durch den wenigstens einen Flüssigkeitspfad, dessen Orientierung in Abhängigkeit von einer wirkenden Corioliskraft verläuft, Flüssigkeiten in Abhängigkeit von der wirkenden Corioliskraft in unterschiedliche Kavitäten (121, 122; 261, 262; 421, 422) lenkbar sind.

7. Vorrichtung nach einem der vorhergehenden Ansprüche, **dadurch gekennzeichnet, dass** durch den wenigstens einen Flüssigkeitspfad, dessen Orientierung in Abhängigkeit von einer wirkenden Corioliskraft verläuft, Flüssigkeiten in Abhängigkeit von der wirkenden Corioliskraft zu unterschiedlichen Anteilen in unterschiedliche Kavitäten (121, 122; 261, 262; 421, 422) lenkbar sind.

8. Vorrichtung nach einem der vorhergehenden Ansprüche, **dadurch gekennzeichnet, dass** durch den wenigstens einen Flüssigkeitspfad, dessen Orientierung in Abhängigkeit von einer wirkenden Corioliskraft verläuft, feste oder flüssige oder gasförmige Bestandteile von Flüssigkeiten, die eine unterschiedliche Dichte aufweisen, in Abhängigkeit von der wirkenden Corioliskraft in unterschiedliche Kavitäten (121, 122; 261, 262; 421, 422) lenkbar sind.

9. Vorrichtung nach einem der vorhergehenden Ansprüche, **dadurch gekennzeichnet, dass** die Vorrichtung zur Durchführung von chemischen und/oder biochemischen Prozessen vorgesehen ist.

10. Vorrichtung nach einem der vorhergehenden Ansprüche, **dadurch gekennzeichnet, dass** die Vorrichtung zum Einsetzen in einen Rotor einer Zentrifuge vorgesehen ist.

**11.** Vorrichtung nach einem der vorhergehenden Ansprüche, **dadurch gekennzeichnet, dass** die wenigstens zwei axial übereinander angeordneten Körper (110, 120; 210, 220; 410, 420) in Abhängigkeit von einer Zentrifugalkraft oder einer gleichwirkenden Kraft gegeneinander verschiebbar oder verdrehbar sind, wobei vorzugsweise für die Verdrehung der Körper gegeneinander ein Eingriff von Führungsfedern des einen Körpers in eine Profilzahnreihe des anderen Körpers und eine entgegen der Zentrifugalkraft oder entgegen der gleichwirkenden Kraft wirkende Rückstellkraft der Körper vorgesehen ist.

# Fig. 1

# Fig. 2A

# Fig. 2B

## Fig. 3A          ## Fig. 3B          ## Fig. 3C

EP 2 868 378 A1

# Fig. 4

410

450

420

452

421

422

→

1000

450

453

421

422

$F_{Zentr.}$

$F_{Koriolis}$

2000

EP 2 868 378 A1

**Fig. 5**

EP 2 868 378 A1

Europäisches
Patentamt

European
Patent Office

Office européen
des brevets

**EUROPÄISCHER RECHERCHENBERICHT**

Nummer der Anmeldung

EP 14 18 4707

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2006/093978 A2 (UNIV CALIFORNIA [US]; ZOVAL JIM V [US]; MADOU MARC J [US]; JIA GUANGYA) 8. September 2006 (2006-09-08) * Abbildung 4 * ----- | 1-11 | INV. B01L3/00 F16K99/00 |
| A | DE 10 2010 003223 A1 (UNIV ALBERT LUDWIGS FREIBURG [DE]; HAHN SCHICKARD GES [DE] ALBERT LUDW) 29. September 2011 (2011-09-29) * das ganze Dokument * ----- | 1-11 | |
| A | BRENNER T ET AL: "A FLOW SWITCH BASED ON CORIOLIS FORCE", INTERNATIONAL CONFERENCE ON MINIATURIZED CHEMICAL AND BIOCHEMICAL ANALYSIS SYSTEMS, XX, XX, 5. Oktober 2003 (2003-10-05), Seiten 903-906, XP008059671, * das ganze Dokument * ----- | 1-11 | |
| A | US 2006/073082 A1 (DUCREE JENS [DE] ET AL) 6. April 2006 (2006-04-06) * das ganze Dokument * ----- | 1-11 | RECHERCHIERTE SACHGEBIETE (IPC) B01L F16K |
| A | US 2009/118112 A1 (OZAKI NOBUHIKO [JP]) 7. Mai 2009 (2009-05-07) * das ganze Dokument * ----- | 1-11 | |
| A | DE 103 56 369 A1 (ALBERT LUDWIGS UNI FREIBURG VE [DE]) 4. Mai 2005 (2005-05-04) * das ganze Dokument * ----- | 1-11 | |
| A | EP 1 795 894 A1 (ROCHE DIAGNOSTICS GMBH [DE]; HOFFMANN LA ROCHE [CH]) 13. Juni 2007 (2007-06-13) * das ganze Dokument * ----- | 1-11 | |

Der vorliegende Recherchenbericht wurde für alle Patentansprüche erstellt

| Recherchenort | Abschlußdatum der Recherche | Prüfer |
|---|---|---|
| München | 17. März 2015 | Skowronski, Maik |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 18 4707

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-03-2015

| Im Recherchenbericht angeführtes Patentdokument | Datum der Veröffentlichung | Mitglied(er) der Patentfamilie | Datum der Veröffentlichung |
|---|---|---|---|
| WO 2006093978 A2 | 08-09-2006 | CA 2599338 A1<br>EP 1853697 A2<br>JP 2008531273 A<br>US 2008190503 A1<br>WO 2006093978 A2 | 08-09-2006<br>14-11-2007<br>14-08-2008<br>14-08-2008<br>08-09-2006 |
| DE 102010003223 A1 | 29-09-2011 | CN 102905794 A<br>DE 102010003223 A1<br>EP 2536507 A1<br>US 2013252796 A1<br>WO 2011117327 A1 | 30-01-2013<br>29-09-2011<br>26-12-2012<br>26-09-2013<br>29-09-2011 |
| US 2006073082 A1 | 06-04-2006 | US 2006073082 A1<br>WO 2006037614 A2 | 06-04-2006<br>13-04-2006 |
| US 2009118112 A1 | 07-05-2009 | JP 4322956 B2<br>US 2009118112 A1<br>WO 2008007532 A1 | 02-09-2009<br>07-05-2009<br>17-01-2008 |
| DE 10356369 A1 | 04-05-2005 | KEINE | |
| EP 1795894 A1 | 13-06-2007 | CA 2622206 A1<br>CN 101322029 A<br>EP 1795894 A1<br>EP 1957972 A1<br>JP 2009518632 A<br>US 2008290048 A1<br>WO 2007065278 A1 | 14-06-2007<br>10-12-2008<br>13-06-2007<br>20-08-2008<br>07-05-2009<br>27-11-2008<br>14-06-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010003223 A1

- US 2006073082 A1